# EUROPÄISCHE PATENTSCHRIFT

(11) **EP 0 876 318 B1**
(45) Veröffentlichungstag und Bekanntmachung des Hinweises auf die Patenterteilung: **23.08.2000**
(21) Anmeldenummer: 96942306.0
(22) Anmeldetag: 03.12.1996
(51) Int. Cl.: C07C 31/30, C07F 7/00, C07F 7/28, C08F 4/10, C08F 4/16, D21H 25/18

(54) **VERFAHREN ZUR HERSTELLUNG VON ALKOXIDEN MIT ERDALKALIEN UND TITAN, ZIRKON UND/ODER HAFNIUM**
PROCESS FOR THE PREPARATION OF ALKOXIDES WITH ALKALINE EARTHS AND TITANIUM, ZIRCONIUM AND/OR HAFNIUM
PROCEDE DE PREPARATION D'ALCOXIDES CONTENANT DES BASES ALCALINOTERREUSES ET DU TITANE, DU ZIRCON ET/OU DU HAFNIUM

(30) Priorität: 06.12.1995 DE 19545444
(43) Veröffentlichungstag der Anmeldung: 11.11.1998
(73) Patentinhaber: E.I. DU PONT DE NEMOURS AND COMPANY, Wilmington Delaware 19898 (US)
(72) Erfinder: RAULEDER, Hartwig, D-79618 Rheinfelden (DE); STANDKE, Burkhard, D-79540 Lörrach (DE); HORN, Michael, D-79618 Rheinfelden (DE); KÖTZSCH, Hans-Joachim, D-79618 Rheinfelden (DE); SREBNY, Hans-Günther, D-31582 Nienburg (DE)
(74) Vertreter: Dixon, Philip Matthew
(86) Internationale Anmeldenummer: EP9605359
(87) Internationale Veröffentlichungsnummer: WO9720790

(56) Entgegenhaltungen:
- DE-A- 4 138 750
- US-A- 3 676 182
- US-A- 4 174 299
- US-A- 4 178 300

## Beschreibung

Die Erfindung betrifft ein Verfahren zur Herstellung von Titan- oder Zirkon- oder Hafnium- und Magnesium- oder Kalzium- oder Strontium- oder Bariumhaltigen Alkoxiden.

Metallalkoholate und Metallsäureester finden vielseitige Anwendungen in technischen Bereichen.

Für die Herstellung von Ziegler-Katalysatoren geht man im allgemeinen von Metallalkoholaten aus, die Vorgehensweise als solche ist bekannt. Häufig werden Vanadium- sowie Chrom-haltige Katalysatoren dieser Art bei der Olefinpolymerisation in Suspension oder Gasphase eingesetzt, obwohl solche Vanadium- bzw. Chrom-haltigen Katalysatoren aus toxikologischer Sicht wenig wünschenswert sind.

Zellulose-haltige Materialien, z. B. Aluminiumsulfat-haltiges Papier, sind vom Abbau durch Säure bedroht. Große, unersetzliche historische Akten- und Buchbestände stehen vor der Vernichtung, bedingt durch den Angriff von Säure.

Bereits 1966 wird die Verwendung von Alkali- oder Erdalkalialkoholat-haltigen Laugen als neutralisierende Komponente für die Behandlung solcher Zellulose-haltiger Materialien beschrieben (US-A-3 676 182). Eine solche Behandlungslösung kann als vorbeugende Maßnahme gegen ein Übermaß an Basizität auch vorwiegend sauer wirkende Alkoxide, beipielsweise der Elemente Aluminium, Zinn, Bor, Titan oder Zirkon, enthalten - ohne daß eine solche Maßnahme in der Beschreibung oder den Beispielen der obengenannten US-Patentschrift näher dargelegt wird.

Aus grundlegenden Arbeiten von Meerwein und Bersin ("Untersuchungen über Metallalkoholate und Orthosäureestern", Liebigs Ann. Chem. 476, 113-150) ist die Darstellung von komplexen Alkoxiden aus den elementaren Metallen, wie z. B. aus Aluminium, Magnesium, Kalzium, bekannt. Für die Elemente Titan, Zirkon und Hafnium kommt dieses Verfahren nicht in Betracht, da ein Stillstand der Reaktion zwischen einem viel reaktiveren Alkalialkoholat und einem Titan- oder Zirkonester auf der Stufe niedriger Umsatzraten beschrieben und eine noch schlechtere Reaktivität für Erdalkalialkoholate in Verbindung mit Titan- oder Zirkonester aufgrund der im Vergleich zu den AJkalialkoholaten ohnehin nicht so hohen Reaktivität prognostiziert werden konnte.

Tatsächlich findet, nach eigenen Untersuchungen, in gemeinsamen Lösungen oder Suspensionen von Alkoholaten der Erdalkalien und des Titans oder Zirkons auch keinerlei Verbindungsbildung statt, die eingesetzten Alkoholate liegen nebeneinander vor, ohne miteinander zu reagieren; auch in der Siedehitze der Lösung wird bei Entfernen des Löse- bzw. Suspensionsmittels, z. B. Kohlenwasserstoffe wie Hexan, Heptan etc., aromatische Kohlenwasserstoffe, z. B. Xylol, Toluol oder Siloxane, z. B. Hexamethyldisiloxan, unter Vakuum keine Bildung komplexer Alkoxide beobachtet.

Tatsächlich ist das damals in der US-A-Nr. 3 676 182 vorgeschlagene Konservierungsverfahren trotz der hohen Dringlichkeit auch nicht über das Versuchsstadium hinaus angewandt worden, weil es eine Reihe von unabdingbaren Voraussetzungen für die Anwendung nicht erfüllt: beispielsweise die Gewährleistung der flüssigen Form der häufig zur Unlöslichkeit neigenden Neutralisationsmittel für eine umfassende, d. h. die erfolgreiche Vollständigkeit der Papierimprägnierung, und insbesondere die Unschädlichkeit gegenüber von Druck- und Stempelfarben der unbedingt vollständig unversehrt zu erhaltenden Texte und Abbildungen sowie deren büchertechnischen Hilfsmittel.

Die DE-A-41 38 750 offenbart Doppelalkoxide der Formel

MeI(OR)ₓ · MeII(OR)_{y} ,

wobei MeI einem Element der IV. Nebengruppe des Periodensystems sowie Aluminium oder Zinn und MeII einem Alkali- oder Erdalkalielement entspricht und darüber hinaus die OR-Gruppen von Alkoholen unterschiedlicher Art, z. B. ein- oder mehrwertigen Alkoholen, gebildet werden können, also sind hieraus Verbindungen zweier Alkoxide im Einsatzverhältnis 1 : 1 und jeweils gleichen Alkoxidgruppen, wie beispielsweise Al^{III}(OC₂H₅)₃·K^{I}(OC₂H₅) oder Sn^{IV}(OC₃H₇)₄·Mg^{II}(OC₃H₇)₂oder Zr^{IV}(O-C₂H₄-O)₂ · Ca^{II}(O-C₂H₄-O), abzuleiten. Solche Doppelalkoxide finden als Neutralisationsmittel, zweckmäßigerweise als Lösung in einem geeigneten Lösemittel (DE-A-41 04 515), beispielsweise Alkohole, Fluor- oder Fluorchlorkohlenwasserstoffe, Benzinkohlenwasserstoffe oder Siloxane, zur Massenentsäuerung von Archivalien, Anwendung. Nachteilig ist hier, daß bei Einsatz obengenannter Doppelalkoxide deutliche pulverförmige Rückstände, beispielsweise der Metalloxide bzw. Oxidhydrate, Oxidhydroxide, der entsprechenden Carbonate usw., nach der Massenentsäuerung zurückbleiben. Ungelöst bleibt ferner eine möglichst gleichzeitig mit der Neutralisierung zu leistende Verbesserung der mechanischen Stabilisierung der in der Regel mehr oder weniger in angegriffenem Zustand oder bereits in beginnendem Zerfall befindlichen Papierblätter.

Der vorliegenden Erfindung liegt daher die Aufgabe zugrunde, einerseits neben einer Neutralisation säurehaltiger Zellulosefasern enthaltender Materialien eine zusätzliche mechanische Stabilisierung zu bewirken und ein für die Produktion einer Substanz mit solchen Eigenschaften geeignetes Verfahren zur Herstellung zu entwickeln.

Im einzelnen betrifft die Erfindung ein Verfahren zur Herstellung von Alkoxiden der allgemeinen Formel I

[M^{II}(OR)_{2-y}(OR¹)_{y}]ₙ · [M^{IV}(OR¹)_{4-z}(OR)_{z}] (I),

wobei M^{II} Magnesium und/oder Kalzium und/oder Strontium und/oder Barium und M^{IV} Titan und/oder Zirkon und/oder Hafnium bedeuten, R einen Alkylrest mit 1 bis 18 C-Atomen und R¹ einen Alkylrest mit 1 bis 18 C-Atomen darstellen, y einen Wert von 0 bis 2 und z einen Wert von 0 bis 4 annehmen und n eine Zahl zwischen 0,001 und 3 ist,
durch Umsetzen von mindestens einem Alkoxid der Elemente Magnesium und/oder Kalzium und/oder Strontium und/oder Barium mit mindestens einem Alkoxid der Elemente Titan und/oder Zirkon und/oder Hafnium bei einer Temperatur, die im Bereich der Zersetzungstemperatur von mindestens einem der eingesetzten Alkoxide liegt,

Geeigneterweise können Substanzen, die die Bildung einer Schmelze fördern, der Reaktionsmischung der einzelnen eingesetzten Alkoxide zugesetzt werden. Die nach dem erfindungsgemäßen Verfahren herstellbaren Alkoxide der allgemeinen Formel I weisen darüber hinaus bei Verwendung zur Konservierung und/oder Stabilisierung von Zellulosefaser-haltigen Materialien besonders günstige Eigenschaften auf. Ferner können die nach dem erfindungsgemäßen Verfahren erhältlichen Alkoxide sowie deren Lösungen als besonders geeignet für die Herstellung von Katalysatoren zur Polymerisation von Olefinen eingesetzt werden.

Unter Alkoxiden der allgemeinen Formel I sind im allgemeinen solche Verbindungen zu zählen, die einer Zusammensetzung , wie beispielsweise [Mg (C₂H₅O)₂] · [Ti (C₂H₅O)₃ (i-C₃H₇O)] (Magnesium-Titan-(1:1)-Ethylat-Isopropylat) oder [Mg_{0,5} Ca_{0,5} (CH₃O)₂]_{0,3} · [Ti(CH₃O)₄] (Magnesium/Kalzium-Titan-(0,3:1)-Methylat) oder [Mg (C₂H₅O)₂]_{1,75} · [Zr (n-C₈H₁₇O)₄] (Magnesium-Zirkon-(1,75:1)-Ethylat-n-Octylat) oder [Ba (C₂H₅O)₂]·[Ti_{0,9} Zr_{0,1} (i-C₄H₉O)₄] (Barium-Titan/Zirkon-(1:1)-Ethylat-i-Butylat) entsprechen.

Beim erfindungsgemäßen Verfahren wird geeigneterweise mindestens ein Alkoxid der Elemente Magnesium und/oder Kalzium und/oder Strontium und/oder Barium mit mindestens einem Alkoxid der Elemente Titan und/oder Zirkon und/oder Hafnium in einem molekularen Verhältnis von 0,001 bis 3 : 1, vorzugsweise in einem molekularen Verhältnis von 0,5 bis 1,5 : 1, umgesetzt.

Im allgemeinen werden die Alkoxide innerhalb des zuvor angegebenen Bereichs der Molverhältnisse in Substanz als Suspension oder Pulver weitgehend homogen gemischt und anschließend auf Reaktionstemperatur gebracht. Vorzugsweise wird das erfindungsgemäße Verfahren so durchgeführt, daß bei der Umsetzung eine homogene Phase entsteht.

Die Umsetzung wird bevorzugt in Gegenwart mindestens eines inerten Flußmittels durchgeführt. Als Flußmittel kann man Kohlenwasserstoffe, beispielsweise Pentan, Hexan, Heptan, und/oder flüssige Fluorkohlenwasserstoffe, beispielsweise 1H-Perfluorhexan und Perfluor-2-methylpentan, und/oder Alkohole, beispielsweise Ethanol, und/oder Organosiloxane, beispielsweise Hexamethyldisiloxan, oder deren Mischungen einsetzen.

Für die Umsetzung beim erfindungsgemäßen Verfahren kann ein Verhältnis Alkoxide zu Flußmittel von 99,9 Gew.-% zu 0,1 Gew.-% bis 0,1 Gew.-% zu 99,9 Gew.-% eingestellt werden.

Die Umsetzung kann bei einer Temperatur zwischen 105 und 200 °C, vorzugsweise 120 bis 190 °C, ganz besonders vorzugsweise zwischen 140 und 170 °C, durchgeführt werden.

Beim erfindungsgemäßen Verfahren wird die Umsetzung der eingesetzten Alkoxide vorzugsweise über einen Zeitraum von 1 bis 8 Stunden durchgeführt. Dabei werden die Zielprodukte in der Regel in nahezu quantitativen Ausbeuten erhalten.

Das durch die Umsetzung erhaltene Alkoxid kann durch Zugabe von Lösemitteln auf eine Konzentration von > 0 bis 90 Gew.-% eingestellt werden.

Für die Anwendung als Precursor zur Katalysatorherstellung für die Olefinpolymerisation ist eine Lösung der erfindungsgemäß hergestellten Alkoxide in Kohlenwasserstoffen, vorzugsweise in Hexan und/oder Heptan, zweckmäßig.

Gegenstand der vorliegenden Erfindung ist auch die Verwendung der Alkoxide nach Anspruch 1 und der nach den Ansprüchen 2 bis 9 hergestellten Alkoxide sowie deren Lösungen für die Herstellung der Katalysatoren zur Polymerisation von Olefinen.
Die nach dem erfindungsgemäßen Verfahren hergestellten Alkoxide können zur Konservierung und/oder Stabilisierung von Zellulosefaser-haltigen Materialien verwendet werden. Die Verwendung kann dabei in Lösemittel oder als Emulsion erfolgen.
Für deren Anwendung als Konservierungsmittel für Zellulose-haltige Materialien können vorteilhafterweise Fluorkohlenwasserstoffe, besonders vorteilhafterweise 1H-Perfluorhexan und Perfluor-2-methylpentan, sowie Methylsiloxane sowie Hexamethyldisiloxan, als leicht verdampfbare Lösemittel verwendet werden.

Die Anwendung solcher Lösemittel in Verbindung mit den erfindungsgemäß hergestellten Alkoxiden ist dann besonders vorteilhaft, wenn die Verbindungen der allgemeinen Formel I Magnesium und Titan und die Alkoxide Ethyl- und Isopropylgruppen als organischen Rest enthalten; dieses bewirkt einen spürbaren Stabilisierungseffekt im behandelten Papier. Geeigneterweise wird dabei der Hauptanteil der erfindungsgemäßen Alkoxide der allgemeinen Formel I in das Papier eingebunden und nicht mehr, wie bisher beobachtet, als weißes, pulverartiges Titandioxid abgesondert. Dieser überraschende Effekt, der gleichzeitig bei der Neutralisation des Papiers erfolgt, bewirkt eine zusätzliche mechanische Stabilisierung des Papiers im selben Arbeitsschritt. Gleichzeitig kann darüber hinaus eine hydrophobierende Ausrüstung Zellulosefaser-haltiger Materialien erzielt werden, was ein weiterer Schutz, z. B. gegenüber eindringender Feuchtigkeit, bedeutet, die gegebenenfalls auch mit Schadstoffen belastet sein kann.

Durch die nachstehenden Beispiele wird die Erfindung näher erläutert:

### Beispiel 1

### Herstellung von Magnesium-Titan-(1:1)-Ethylat

In einem 2 l-Laborreaktor aus Glas mit Rührer, Tropftrichter (500 ml), Rückflußkühler (0,2 m²) und Innenthermometer, geheizt mittels Doppelmantel und Umlaufthermostat, wurden unter Ausschluß von Luftsauerstoff und Feuchtigkeit 1 Mol (228,1 g) festes Tetraethoxititan und 1 Mol (114,4 g) festes Diethoximagnesium vorgelegt und unter langsamem Rühren 6 Stunden lang auf 140 °C erwärmt. Dabei bildete sich eine klare, schwachgelbe, viskose Flüssigkeit, die nach Abkühlung auf 100 °C in 342 g (560 ml) kaltem n-Heptan klargelöst wurde.

Die 50 %ige Lösung in Heptan hatte eine Dichte (D.₄²⁰) von 0,841 g/ml und eine Viskosität von 1,83 mPa•s (20 °C).

| Analyse: | | | | | | |
|---|---|---|---|---|---|---|
| gefunden | Mg | 3,5 | %; | Ti | 6,9 | %; |
| berechnet | Mg | 3,55 | %; | Ti | 6,99 | %; |

### Vergleichsbeispiel zu Beispiel 1

23 g Tetraethoxititan und 11,5 g Diethoximagnesium wurden in 56 ml n-Heptan suspendiert und unter Rühren bei einer Innentemperatur von 102-103 °C 72 Stunden lang am Rückfluß gekocht. Die resultierende Suspension wurde bei 46 °C filtriert. Das Filtrat bestand aus einer Lösung des Tetraethoxititans im Heptan und enthielt kein Magnesium. Der Filterrückstand bestand aus unverändertem Magnesiumethylat. Zwischen den beiden Metallalkoholaten hatte demnach keine Anlagerung stattgefunden.

### Beispiel 2

### Herstellung von Magnesium-Titan-(2:1)-Ethylat-Butylat

In einem 700 l-Kessel mit Ankerrührer, Rückflußkühler, Dosiervorlagen für Flüssigkeiten sowie einer Schleuse für die Zuführung rieselfähiger Feststoffe, wurden unter vollständiger Inertisierung 37,0 kg (324 Mol) Diethoximagnesium mit 55,0 kg (162 Mol) Tetra-n-butoxititan vermischt und unter langsamem Rühren 8 Stunden lang auf 162 ° C erwärmt. Dabei entstand eine klare, schwachgelbe, niedrigviskose Flüssigkeit. Danach wurden bei Einhaltung der Temperatur von 80-85 °C innerhalb 3-4 Stunden 218 kg Hexan eingerührt (es tritt dabei etwas Hexan-Rückfluß ein). Nach Abkühlung auf 20 °C wurde eine schwache Magnesiumhydroxid-Trübe abfiltriert (Fließgeschwindigkeit 200 l/h). Es wurden 308 kg der 30 %igen Lösung ausgewogen (99,4 % Ausbeute).

| Analyse: | | | | |
|---|---|---|---|---|
| gefunden | TiO₂ | 4,08 %; | Mg | 2,59 %; |
| berechnet | TiO₂ | 4,20 %; | Mg | 2,56 %; |

### Beispiel 3

### Herstellung von Magnesium-Zirkon-(1:1)-Ethylat-n-Propylat

In einem 1 l-Laborreaktor mit der gleichen Ausstattung wie im Beispiel 1 wurden unter völliger Inertisierung 26,7 g (0,233 Mol) Diethoximagnesium und 76,4 g (0,233 Mol) Tetra-n-propoxizirkon (hergestellt aus handelsüblicher Lösung in n-Propanol durch Trocknen) zusammen mit 5 g n-Heptan 5 Stunden lang bei 143 °C langsam gerührt. Dabei bildete sich eine orangebraune, viskose Flüssigkeit, die bei 108-109 °C durch langsame Zugabe von 112 g n-Heptan in eine klare orangegelbe Lösung überführt wurde.

Diese 47 %ige Lösung in Heptan hatte eine Dichte (D.₄²⁰) von 0,849 g/ml und eine Viskosität von 13,26 mPa•s.

| Analyse: | | | | |
|---|---|---|---|---|
| gefunden | Zr | 9,6 %; | Mg | 2,4 %; |
| berechnet | Zr | 9,7 %; | Mg | 2,6 %; |

### Beispiel 4

### Herstellung von Magnesium-Zirkon-(2,2:1)-n-Propylat

Analog Beispiel 3 wurden 47,0 g (0,33 Mol) Di-n-propoximagnesium und 49,1 g (0,15 Mol) Tetra-n-propoxizirkon in Gegenwart von 7 g Perfluordi-isobuten behandelt. Dabei entstand eine orangebraune, viskose Flüssigkeit, die bei 105-106 °C durch langsame Zugabe von weiteren 137 g Isooctan in eine 40 %ige klare hellorangefarbene Lösung überführt wurde.

| Analyse: | | | | |
|---|---|---|---|---|
| gefunden | Zr | 5,72 %; | Mg | 3,36 %; |
| berechnet | Zr | 5,69 %; | Mg | 3,34 %; |

### Beispiel 5

### Herstellung von Magnesium-Zirkon-(1,8:1)-Ethylat-n-Hexylat

Analog Beispiel 3 wurden 22,9 g (0,20 Mol) Diethoximagnesium und 55,3 g (0,111 Mol) Tetra-n-hexylzirkonat innerhalb 4 Stunden bei 144 °C umgesetzt und die resultierende hellbraune, viskose Flüssigkeit in 342 g n-Heptan gelöst zu einer hellbraun gefärbten klaren 18,6 %igen Lösung. Beim Abkühlen geliert die Lösung zu einem grünlichen Gel, das beim Erwärmen auf 80 °C wieder flüssig wird.

| Analyse: | | | | |
|---|---|---|---|---|
| gefunden | Zr | 2,50 %; | Mg | 1,20 %; |
| berechnet | Zr | 2,42 %; | Mg | 1,16 %; |

### Beispiel 6

### Herstellung von Magnesium-Zirkon-(1,75:1)-Ethylat-n-Octylat

Analog Beispiel 3 wurden 42,6 g (0,0701 Mol) Tetra-n-octylzirkonat mit 14 g (0,1224 Mol) Magnesiumdiethylat innerhalb 2,5 Stunden bei 152 °C umgesetzt und die resultierende gelbe, viskose Flüssigkeit in 342 g n-Heptan gelöst (schwachgelbe 14 %ige Lösung), die auch bei Raumtemperatur flüssig blieb.

| Analyse der 14 %igen Lösung: | | | | |
|---|---|---|---|---|
| gefunden | Zr | 1,60 %; | Mg | 0,73 %; |
| berechnet | Zr | 1,58 %; | Mg | 0,74 %; |

Lösungen höherer Konzentrationen (z. B. 18 %) wurden bei Raumtemperatur äußerst zähflüssig bzw. gelartig (z. B. 22 %).

Beim Eindampfen der 14 %igen Lösung im Rotationsverdampfer und Vakuum-Trocknung wurde ein Feststoff erhalten.

| Analyse: | | | | |
|---|---|---|---|---|
| gefunden | Zr | 11,3 %; | Mg | 5,2 %; |
| berechnet | Zr | 11,3 %; | Mg | 5,3 %; |

Der vorstehende Feststofflöste sich wieder klar in Hexan und Hexamethyldisiloxan jeweils in Test-Konzentrationen von 10 %.

### Beispiel 7

### Herstellung von Magnesium-Hafnium-(1:1)-n-Butylat

Analog Beispiel 3 wurden 47,1 g (0,1 Mol) Tetra-n-butylhafnat mit 17,0 g (0,1 Mol) Di-n-butoximagnesium umgesetzt innerhalb 6 Stunden bei 157 °C in Gegenwart von 5 g Hexamethyldisiloxan. Die resultierende orangegelbe, viskose Flüssigkeit wurde in weiteren 188 g Hexamethyldisiloxan bei 104-105 °C innerhalb von 2 Stunden verdünnt auf eine 25 %ige klare Lösung.

| Analyse: | | | | |
|---|---|---|---|---|
| gefunden | Hf | 7,10 %; | Mg | 0,90 %; |
| berechnet | Hf | 6,96 %; | Mg | 0,95 %; |

### Beispiel 8

### Herstellung von Kalzium-Titan-(1:1)-Isobutylat

Analog Beispiel 3 wurden 34,0 g (0,1 Mol) Tetra-i-butyltitanat mit 18,6 g (0,1 Mol) Kalziumdiisobutylat ohne Flußmittel innerhalb 8 Stunden bei 164 °C umgesetzt und die resultierende schwachgelbe, viskose, klare Flüssigkeit bei 50 °C mit 28 g Perfluordipropen durch Einrühren in eine schwachgelbe 66 %ige Emulsion überführt.

| Analyse: | | | | |
|---|---|---|---|---|
| gefunden | Ti | 5,80 %; | Ca | 5,20; |
| berechnet | Ti | 6,00 %; | Ca | 5,02; |

### Beispiel 9

### Herstellung von Magnesium-Titan-(1:1)-Ethylat-Isopropylat

Analog Beispiel 2 wurden 30,0 kg (262,2 Mol) Diethoximagnesium und 63,5 kg (262,2 Mol) eines Orthotitansäureesters mit 75 % Ethoxi- und 25 % Isopropoxi-Gruppen als Esterkomponenten in Gegenwart von 200 g Aktivkohle 8 Stunden lang bei 169 °C umgesetzt. Bei 103-104 °C wurden 218 kg Hexamethyldisiloxan zudosiert und die resultierende Lösung bei 20 °C filtriert. Es wurden 303,5 kg (97,5 % Ausbeute) farblose, klare, niedrigviskose 30 %ige Lösung erhalten.

| Analyse: | | | | |
|---|---|---|---|---|
| gefunden | TiO₂ | 6,90; | Mg | 2,00; |
| berechnet | TiO₂ | 6,72; | Mg | 2,05; |

### Beispiel 10

### Stabilisierung und Konservierung von über 90-jährigem Papier in Druckerzeugnissen mit Magnesium-Titan-(1:1)-Ethylat-Isopropylat aus Beispiel 9

Vom "Gesetzes- und Verordnungsblatt für das Großherzogtum Baden", Jahresband 1900, wurden von einer Leerseite mehrere Probestreifen der Größe 5 x 40 mm vorsichtig abgeschnitten.

Das leicht gebräunte Papier zeigte sichtliche Alterungsspuren, riß schnell ein und war nicht mehr knickfest. Der pH lag bei ungefähr 5,0 und der Feuchtigkeitsgehalt bei 3-4 %.

Neun unbehandelte Originalprobestreifen wurden durch Übereinanderlegen beider Enden und Beschweren mit einem 100 g-Gewicht für 300 Sekunden zusammengefaltet. Dann wurde das Gewicht wieder entfernt und nach weiteren 30 Minuten der Rückstellwinkel gemessen, um den sich die Faltung in dieser Zeit wieder geöffnet hatte. Diese Messung ergab, daß sieben Proben die Faltung wieder öffneten zu Winkeln von 12 bis 49 Grad. Zwei Proben öffneten die Falte nicht mehr. Alle Proben zeigten viele Faserbrüche.

14 andere unbehandelte Originalprobestreifen wurden in einem Schlenkrohr von 100 ml Volumen bei 25 °C unter Vakuum von ca. 2 mbar gesetzt. Das Vakuum wurde durch Fluten mit einer 6 %igen Lösung von Magnesium-Titan-(1:1)-Ethylat-Isopropylat (Beispiel 9) in Hexamethyldisiloxan aufgehoben und das Schlenkrohr auf 56 °C Innentemperatur mit Hilfe eines Thermostaten drucklos erwärmt. Nach insgesamt 20 Minuten wurde die Flüssigkeit mit Stickstoff wieder herausgedrückt, die Probe erneut voll evakuiert und das Vakuum mit Stickstoff aufgehoben.

Die Proben wurden über Nacht in Petri-Schalen stehen gelassen. Dann wurden neun der behandelten Probestreifen dem gleichen Faltungstest unterzogen, wie vorstehend für die unbehandelten Proben beschrieben. Alle behandelten Proben öffneten die Faltung wieder zu Winkeln von über 90 Grad, zwei erreichten sogar 180 Grad. Die Proben zeigten nur wenig Faserbrüche. Es war auch kaum Titandioxid-Pulver erkennbar. Saurer pH war nicht mehr nachweisbar und der Feuchtigkeitsgehalt lag unter 0,1 %.

### Zu Beispiel 10

### Verwendung von Kalzium-Titan-(1:1)-Isobutylat anstelle des im Beispiel 10 verwendeten Magnesium-Titan-(1:1)-Ethylat-Isopropylats

Analog Beispiel 10 wurden neun unbehandelte Originalprobestreifen im Schlenkrohr mit einer 6 %igen Lösung von Kalzium-Titan-(1:1)-Isobutylat in Hexamethyldisiloxan behandelt. Die behandelten Proben öffneten die Faltung wieder zu Winkeln von 12 bis 72 Grad. An allen Proben waren Faserbrüche erkennbar und alle Proben waren deutlich mit Titandioxid-Pulver bedeckt. Es war kein saurer pH mehr nachweisbar.

## Patentansprüche

1. Verfahren zur Herstellung von Alkoxiden der allgemeinen Formel I
[M^{II}(OR)_{2-y}(OR¹)_{y}]ₙ · [M^{IV}(OR¹)_{4-z}(OR)_{z}] (I),
wobei M^{II} Magnesium und/oder Kalzium und/oder Strontium und/oder Barium und M^{IV} Titan und/oder Zirkon und/oder Hafnium bedeuten, R einen Alkylrest mit 1 bis 18 C-Atomen und R¹ einen Alkylrest mit 1 bis 18 C-Atomen darstellen, y einen Wert von 0 bis 2 und z einen Wert von 0 bis 4 annehmen und n eine Zahl zwischen 0,001 und 3 ist,
durch Umsetzen von mindestens einem Alkoxid der Elemente Magnesium und/oder Kalzium und/oder Strontium und/oder Barium mit mindestens einem Alkoxid der Elemente Titan und/oder Zirkon und/oder Hafnium bei einer Temperatur, die im Bereich der Zersetzungstemperatur von mindestens einem der eingesetzten Alkoxide liegt.

2. Verfahren nach Anspruch 1,
dadurch gekennzeichnet,
daß mindestens ein Alkoxid der Elemente Magnesium und/oder Kalzium und/oder Strontium und/oder Barium mit mindestens einem Alkoxid der Elemente Titan und/oder Zirkon und/oder Hafnium in einem molaren Verhältnis von 0,001 bis 3 : 1 umgesetzt wird.

3. Verfahren nach den Ansprüchen 1 und 2,
dadurch gekennzeichnet,
daß bei der Umsetzung eine homogene Phase entsteht.

4. Verfahren nach den Ansprüchen 1 bis 3,
dadurch gekennzeichnet,
daß die Umsetzung in Gegenwart mindestens eines inerten Flußmittels durchgeführt wird.

5. Verfahren nach Anspruch 4,
dadurch gekennzeichnet,
daß man als Flußmittel Kohlenwasserstoffe und/oder flüssige Fluorkohlenwasserstoffe und/oder Alkohole und/oder Organosilane und oder Organosiloxane oder deren Mischungen einsetzt.

6. Verfahren nach den Ansprüchen 4 und 5,
dadurch gekennzeichnet,
daß für die Umsetzung ein Verhältnis Alkoxide zu Flußmittel von 99,9 Gew.-% zu 0,1 Gew.-% bis 0,1 Gew.-% zu 99,9 Gew.-% eingestellt wird.

7. Verfahren nach den Ansprüchen 1 bis 6,
dadurch gekennzeichnet,
daß die Umsetzung bei einer Temperatur zwischen 105 und 200 °C durchgeführt wird.

8. Verfahren nach den Ansprüchen 1 bis 7,
dadurch gekennzeichnet,
daß das durch die Umsetzung erhaltene Alkoxid durch Zugabe von Lösemitteln auf eine Konzentration von > 0 bis 90 Gew.-% eingestellt wird.

## Claims

1. Process for preparing alkoxides of general formula I
[M^{II}(OR)_{2-y}(OR¹)_{y}]ₙ · [M^{IV}(OR¹)_{4-z}(OR)_{z}] (I)
wherein M^{II} denotes magnesium and/or calcium and/or strontium and/or barium and M^{IV} denotes titanium and/or zirconium and/or hafnium, R denotes a C₁₋₁₈-alkyl group and R¹ denotes a C₁₋₁₈-alkyl group, y may assume a value of 0 to 2 and z may assume a value of 0 to 4 and n is a number between 0.001 and 3,
by reacting at least one alkoxide of the elements magnesium and/or calcium and/or strontium and/or barium with at least one alkoxide of the elements titanium and/or zirconium and/or hafnium at a temperature which is in the region of the decomposition temperature of at least one of the alkoxides used.

2. Process according to claim 1, characterised in that at least one alkoxide of the elements magnesium and/or calcium and/or strontium and/or barium is reacted with at least one alkoxide of the elements titanium and/or zirconium and/or hafnium in a molar ratio of 0.001 to 3 : 1.

3. Process according to claims 1 and 2, characterised in that during the reaction a homogeneous phase is formed.

4. Process according to claims 1 to 3, characterised in that the reaction is carried out in the presence of at least one inert flow agent.

5. Process according to claim 4, characterised in that hydrocarbons and/or liquid fluorohydrocarbons and/or alcohols and/or organosilanes and/or organosiloxanes or the mixtures thereof are used as the flow agent.

6. Process according to claims 4 and 5, characterised in that a ratio of alkoxides to flow agent of from 99.9 wt.% : 0.1 wt.% to 0.1 wt.% : 99.9 wt.% is used for the reaction.

7. Process according to claims 1 to 6, characterised in that the reaction is carried out at a temperature of between 105 and 200°C.

8. Process according to claims 1 to 7, characterised in that the alkoxide obtained by the reaction is adjusted to a concentration of > 0 to 90 wt.% by the addition of solvents.

## Revendications

1. Procédé de préparation d'alcoxydes de formule générale I
[M^{II} (OR)_{2-y} (OR¹)_{y}]ₙ·[M^{IV} (OR¹)_{4-z} (OR)_{z}] (I),
dans laquelle M^{II} signifie du magnésium et/ou du calcium et/ou du strontium et/ou du baryum et M^{IV} signifie du titane et/ou du zircon et/ou de l'hafnium, R représente un radical alkyle avec 1 à 18 atomes de carbone et R¹ représente un radicàl alkyle avec 1 à 18 atomes de carbone, y prend une valeur de 0 à 2 et z, une valeur de 0 à 4 et n est un nombre entre 0,001 et 3,
par transformation d'au moins un alcoxyde des éléments magnésium et/ou calcium et/ou strontium et/ou baryum avec au moins un alcoxyde des éléments titane et/ou zircon et/ou hafnium à une température qui se situe dans l'intervalle de la température de décomposition d'au moins un des alcoxydes utilisés.

2. Procédé suivant la revendication 1, caractérisé en ce qu'au moins un alcoxyde des éléments magnésium et/ou calcium et/ou strontium et/ou baryum est transformé avec au moins un alcoxyde des éléments titane et/ou zircon et/ou hafnium dans un rapport molaire de 0,001 à 3:1.

3. Procédé suivant les revendications 1 et 2, caractérisé en ce qu'il se forme une phase homogène lors de la transformation.

4. Procédé suivant les revendications 1 à 3, caractérisé en ce que la transformation s'effectue en présence d'au moins un fondant inerte.

5. Procédé suivant la revendication 4, caractérisé en ce qu'on utilise comme fondant des hydrocarbures et/ou des hydrocarbures fluorés liquides et/ou des alcools et/ou des organosilanes et/ou des organosiloxanes ou leurs mélanges.

6. Procédé suivant les revendications 4 et 5, caractérisé en ce que, pour la transformation, on établit un rapport des alcoxydes au fondant de 99,9% en poids à 0,1% en poids jusqu'à 0,1% en poids à 99,9% en poids.

7. Procédé suivant les revendications 1 à 6, caractérisé en ce que la transformation s'effectue à une température entre 105 et 200°C.

8. Procédé suivant les revendications 1 à 7, caractérisé en ce que l'alcoyxde obtenu par la transformation est ajusté, par l'addition de solvants, à une concentration de > 0 à 90% en poids.
